# EUROPÄISCHE PATENTSCHRIFT

(11) **EP 0 821 147 B1**
(45) Veröffentlichungstag und Bekanntmachung des Hinweises auf die Patenterteilung: **10.05.2000**
(21) Anmeldenummer: 97109811.6
(22) Anmeldetag: 17.06.1997
(51) Int. Cl.: F02D 9/06, F01D 9/02

(54) **Motorbremsvorrichtung für eine Brennkraftmaschine mit Turbolader**
Engine braking device for a turbocharged internal combustion engine
Dispositif de frein moteur pour un moteur à combustion interne avec turbocompresseur

(30) Priorität: 26.07.1996 DE 19630224
(43) Veröffentlichungstag der Anmeldung: 28.01.1998
(73) Patentinhaber: DaimlerChrysler AG, 70567 Stuttgart (DE)
(72) Erfinder: Schmidt, Erwin, 73666 Baltmannsweiler (DE); Sumser, Siegfried, 70184 Stuttgart (DE)

(56) Entgegenhaltungen:
- EP-A- 0 770 772
- DE-A- 2 824 598
- DE-A- 3 610 131
- DE-C- 3 504 465
- US-A- 3 009 320
- PATENT ABSTRACTS OF JAPAN vol. 017, no. 021 (M-1353), 14.Januar 1993 & JP 04 246237 A (ISUZU MOTORS LTD), 2.September 1992
- PATENT ABSTRACTS OF JAPAN vol. 095, no. 001, 28.Februar 1995 & JP 06 278595 A (JIDOSHA KIKI CO LTD), 4.Oktober 1994

## Beschreibung

Die Erfindung betrifft eine Motorbremsvorrichtung für eine Brennkraftmaschine gemäß dem Oberbegriff des Anspruchs 1.

Aus der gattungsbildenden JP-A-4 246237 ist eine Motorbremsvorrichtung für eine Brennkraftmaschine bekannt, die einen Abgasturbolader mit einer Turbine und einem Verdichter sowie eine Abgasleitung und eine Ansaugleitung aufweist. Stromauf der Turbine ist eine Abgasabsperrvorrichtung in der Abgasleitung angeordnet, wobei stromauf der Abgasabsperrvorrichtung eine von der Abgasleitung abführende Bypassleitung vorgesehen ist, die in einem Bereich nahe eines Turbinenrades einmündet. Des weiteren wird eine die Bypassleitung durchströmende Luftmasse über zumindest eine am freien Ende einer Trennwand einer mehrflutigen Turbine angeordneten Düsenöffnung einem Radialringkanal der Turbine zugeführt. In der Trennwand ist zumindest ein Trennwandkanal angeordnet, der jeweils in eine Düsenöffnung mündet. Der Trennwandkanal hat dabei einen zylindrischen Kanalverlauf.

Die US 3,009,320 offenbart eine Starteinrichtung für einen Turbinenmotor, bei der eine auf eine Turbinenrad gerichtete Düse einen verjüngenden Kanalverlauf aufweist.

Aus der DE 28 24 598 C2 ist eine Motorbremse für eine mit einem Abgasturbolader versehene Brennkraftmaschine bekannt, bei der in einer Abgasleitung zwischen Motor und Turbine eines Turboladers eine Abgasabsperrvorrichtung vorgesehen ist. Diese ist als Drehventil mit einem schwenkbaren Ventilkörper ausgebildet, dessen Achse senkrecht zu der Abgasleitung angeordnet ist. Diese Abgasabsperrvorrichtung ist in einer Offenstellung anordenbar, bei der die Abgase ungehindert zur Turbine des Turboladers gelangen. In einer Schließstellung des Drehventils kann noch ein Reststrom des Abgases zur Turbine des Turboladers gelangen, durch den ein Turbinenrad der Turbine angetrieben wird.

Desweiteren ist aus der US-PS 3,591,959 eine Motorbremsvorrichtung für eine Brennkraftmaschine bekannt, bei der zwischen einem Motor und einem Abgasturbolader eine Abgasabsperrvorrichtung vorgesehen ist, mit der ein vorderes und hinteres Auslaß-Sammelrohr einer 6-Zylinder-Brennkraftmaschine absperrbar ist.

Beide Motorbremsvorrichtungen mit einer vor dem Abgasturbolader angeordneten Abgasabsperrvorrichtung weisen den Nachteil auf, daß im Bremsbetrieb bei geschlossener Abgasabsperrvorrichtung die Turbinenleistung im wesentlichen auf Null reduziert wird. Dadurch wird ebenfalls die Turbolader-Drehzahl verringert, wodurch eine Aufladung der Brennkraftmaschine nahezu ausbleibt. Die an den Luftmassenstrom zu übertragende Bremsenergie wird durch die verringerte Luftmenge stark eingeschränkt. Eine hohe geforderte Bremsleistung geht dabei mit einer hohen Motoraustrittstemperatur der Luft einher, wodurch der Motor unter einer hohen Temperaturbelastung steht. Im Bremsbetrieb erfolgt bei einer derartigen Anordnung desweiteren bei hoher Bremsleistungsforderung ein hoher Auspuff-Sammelleitungsdruck-Bedarf, wodurch das Problem des Ventil-Schwimmens auftritt. Der Auspuff-Sammelleitungsdruck kann die Kraft von Auslaßventilfedern überschreiten, wodurch die Motorbremswirkung weiter verschlechtert wird.

Der Erfindung liegt deshalb die Aufgabe zugrunde, eine Motorbremsvorrichtung für eine Brennkraftmaschine mit einem Abgasturbolader zu schaffen, bei der die Bremsleistung bei geringerer Temperaturbelastung von Motor und Abgasleitung erhöht wird.

Diese Aufgabe wird erfindungsgemäß durch die kennzeichnenden Merkmale des Anspruchs 1 gelöst.

Eine vor einer Abgasabsperrvorrichtung angeordnete und abzweigende Bypassleitung, die in einem Bereich nahe eines Turbinenrades einmündet, weist den Vorteil auf, daß die dem Turbinenrad zugeführte Luftmassen unter hoher Strömungsgeschwindigkeit zugeführt werden, wodurch die Turboladerdrehzahl im Vergleich zu der geschlossenen Abgasabsperrvorrichtung aus dem Stand der Technik nicht gegen Null geht. Dadurch wird die auf der Saugseite der Brennkraftmaschine zugeführte Luftmasse, die deutlich über dem Umgebungsdruck liegt, in die Motorzylinder gepreßt, wodurch insgesamt ein höherer Luftmassendurchsatz in der Brennkraftmaschine erzielt werden kann. Dadurch kann gegenüber der aus dem Stand der Technik bekannten Abgasabsperrvorrichtung eine zumindest gleich große Bremsleistung bei einer geringeren Temperaturbelastung in der Brennkraftmaschine und der Abgasleitung erzielt werden. Diese Anordnung hat in Versuchen gezeigt, daß dadurch sogar eine deutliche Erhöhung der Bremsleistung durch die verdichtete Luft, die der Brennkraftmaschine zugeführt wird, realisiert werden kann.

Nach einer vorteilhaften Ausgestaltung der Erfindung ist vorgesehen, daß die Bypassleitung die Luftmassen über zumindest eine am Ende einer Trennwand eines Turbinengehäuses angeordneten Düsenöffnung einem Radialringkanal der Turbine zuführt. Diese Anordnung betrifft mehrflutige, insbesondere zweiflutige, Radialturbinen. Dadurch können die Luftmassen dicht vor dem Turbinenrad zugeführt und ein hoher Turbinenradwirkungsgrad erzielt werden.

Nach einer weiteren vorteilhaften Ausgestaltung der Erfindung ist vorgesehen, daß in einer Trennwand einer mehrflutigen Radialturbine Trennwandkanäle vorgesehen sind, die jeweils mit einer Düsenöffnung in Verbindung stehen. Alternativ kann vorgesehen sein, daß in der Trennwand ein Ringraum vorgesehen ist, der sich bis zu den Düsenöffnungen erstreckt. Diese beiden Alternativen weisen eine einfache und kostengünstige Ausgestaltung von Kanälen auf, um die Luftmasse einem Ringkanal vor dem Turbinenrad zuzuführen.

Nach einer weiteren vorteilhaften Ausgestaltung der Erfindung ist vorgesehen, daß sich der bzw. die Trennwandkanäle und der bzw. die Ringräume zum freien Ende der Trennwand verjüngen und die sich daran anschließenden Düsenkanäle an ihren Düsenöffnungen den engsten Querschnitt aufweisen. Dadurch kann bewirkt werden, daß insbesondere durch eine tangentiale Austrittsrichtung zu dem Turbinenrad eine hohe drallförmige Turbinenradzuströmung erzielt werden kann. Die Zuführung der Luftmasse erfolgt vorteilhafterweise über dünne Rohrleitungen. Die Luftmassen stehen unter hohem Druck und können durch die Düsenöffnungen vor dem Turbinenrad mit einer hohen Strömungsgeschwindigkeit austreten. Die Drücke, die beispielsweise über 50 bar liegen können, bewirken, daß die Strömungsgeschwindigkeiten trotz der kleinen Strömungsquerschnitte in den Zuführungen relativ gering und damit verlustarm sind. Im Expansionsquerschnitt nahe vor dem Turbinenrad ergeben sich dann durch die hohen Druckverhältnisse Überschallgeschwindigkeiten der Luftmassen und damit auch bei relativ kleinen Turbinenwirkungsgrade hohe Turbinenleistungen. Die Turbine kann in dieser Betriebsweise als reine Impulsturbine analog der Pelton-Gleichdruckturbine arbeiten. Alternativ kann vorgesehen sein, daß bei getrennten Einzeldüsen bzw. Zuführung der Luftmassen über bestimmte Düsenöffnungen eine hohe Teilbeaufschlagung ermöglicht ist. Dies kann durch die Zündfolge des Motors bzw. dem Öffnen der Steuerventile im Zylinder für die einzelnen Düsenöffnungen erfolgen und somit eine phasenmäßige Nutzung der Zuführung der Luftmassen durch die einzelnen Düsenöffnungen bestimmt werden.

Eine derartige Zuordnung der Luftzuführung kann an den jeweiligen Zylindern durch die wirkungsgradgünstigste zeitliche Schaltung bestimmt sein. Dabei können die über den Umfang angeordneten Düsenöffnungen mit Luftmassen hintereinander von den Druckstößen durchlaufen werden oder eine gemischte Beaufschlagung einzelner Düsenöffnungen erfolgen.

Nach einer weiteren vorteilhaften Ausgestaltung der Erfindung ist vorgesehen, daß der Düsenkanal und die Düsenöffnung in einem relativ zur Umfangsrichtung des Turbinenrades flachen Austrittswinkel angeordnet ist. Dadurch kann erzielt werden, daß bei gleichzeitiger Beaufschlagung der beiden Strömungskanäle und der Düsen in der Trennwand die Strömungswinkel nahezu identisch sein können, da die über die Strömungskanäle zugeführte Luftmassen aufgrund der hohen Strömungsgeschwindigkeiten mit beschleunigt werden, die beim Auftreten der Luftmassen aus den Düsenöffnungen erfolgen. Somit kann eine hohe Turbinenleistung durch die große Drallkomponente der Strömung gegeben sein.

Nach einer weiteren vorteilhaften Ausgestaltung der Erfindung ist vorgesehen, daß mehrere Düsenöffnungen im Gehäuse des Turbinenrades vorgesehen sind, so daß eine über den Umfang verteilte gleichmäßige Zuführung und Beaufschlagung mit Luftmassen gegeben ist. Dadurch können gleichmäßige Kräfte auf das Turbinenrad wirken, wodurch wiederum eine geringe Lagerbelastung auf die die Welle zwischen Verdichterrad und Turbinenrad aufnehmenden Lager wirken kann.

Nach einer weiteren vorteilhaften Ausgestaltung der Erfindung ist vorgesehen, daß die Düsenöffnungen im wesentlichen tangential zum Turbinenrad angeordnet sind. Dadurch wird die drallförmige Einströmung erzielt. Dadurch wird die Turbinenleistung gesteigert und ein höherer Luftmassenstrom ermöglicht.

Nach einer weiteren vorteilhaften Ausgestaltung der Erfindung ist vorgesehen, daß die Abgasabsperrvorrichtung und zumindest der Abzweig der Bypassleitung in dem Turbinengehäuse integriert sind. Dadurch kann eine Bauteileminimierung gegeben sein. Zudem führt dies zu einer schnelleren Montage, da eine Montage der Abgasabsperrvorrichtung und das Anbringen eines Abzweigs in der Abgasleitung ausbleiben kann.

Weitere zweckmäßige Ausgestaltungen der Erfindung sind in den Unteransprüchen und in der nachfolgenden Beschreibung angegeben.

Anhand von in der Zeichnung dargestellten bevorzugten Ausführungsbeispielen wird die Erfindung nachfolgend näher erläutert. Es zeigen:
- Fig. 1: eine schematische Darstellung der erfindungsgemäßen Anordnung einer Bremsvorrichtung,
- Fig. 2: eine Ausführungsform einer zweiflutigen Radialturbine und
- Fig. 3: eine schematische Seitenansicht entlang der Linie V-V in Fig. 2.

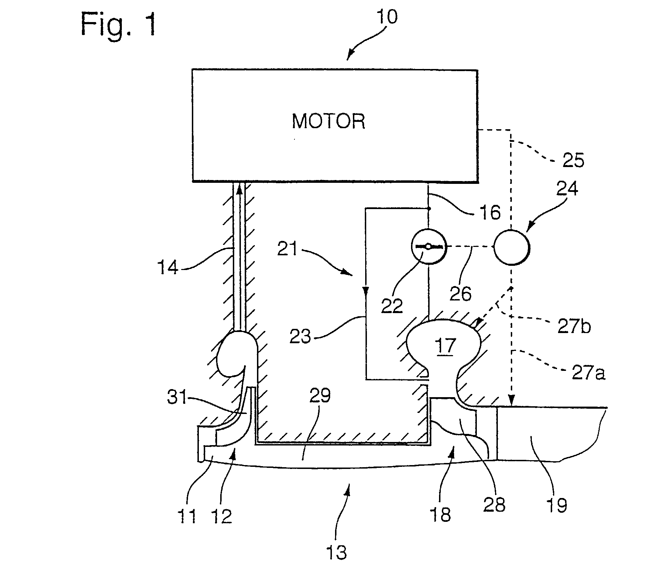

In Fig. 1 ist ein Motor 10 einer mehrzylindrischen Brennkraftmaschine dargestellt. Eine erste Ansaugleitung 11 führt Luftmassen einem Verdichter 12 eines Abgasturboladers 13 zu. Die Luftmasse wird komprimiert und über eine zweite Druckleitung 14 des Verdichters dem Brennraum des Motors 10 zugeführt. Auf einer Abgasseite des Motors 10 ist eine erste Abgasleitung 16 vorgesehen, die in einen Strömungskanal 17 einer Turbine 18 des Abgasturboladers 13 führt. Über eine zweite Abgasleitung 19 stromab der Turbine 18 wird das Abgas über eine Abgasreinigungsanlage (nicht dargestellt) ins Freie geführt.

Auf der Abgasseite des Motors 10 ist eine Motorbremsvorrichtung 21 vorgesehen, die eine Abgasabsperrvorrichtung 22 und eine stromauf der Abgasabsperrvorrichtung 22 abzweigende Bypassleitung 23 aufweist. Parallel zu der Abgasabsperrvorrichtung 22 ist eine Abblasevorrichtung 24 angeordnet, die mit einer ersten Verbindungsleitung 26 gekoppelt ist. Mit der Signalleitung 25 wird die Abblaseeinrichtung geregelt. Je nach geforderter Bremsleistung kann das Abblaseventil, das eine genaue Dosierung der Luftmenge ermöglicht, geöffnet werden. Der Abblasevorrichtung kommt auch die Aufgabe der Überlastungssicherung zu. Ab einem vorgegebenen maximalen Druck hinter den Auslaßventilen wird das Abblaseventil zur Öffnung angesteuert. Die Leitung 27a stromab des Abblaseventils 24 mündet in der Leitung 19. Möglich wäre auch alternativ eine Leitung 27b, die in der Turbinenspirale 17 endet.

Die Abgasabsperrvorrichtung 22 ist als Bremsklappe, vorzugsweise als Schmetterlingsklappe, ausgebildet. Die Bremsklappe 22 entspricht dem Querschnitt der Abgasleitung 16, so daß diese die Abgasleitung 16 im Schiebe- bzw. Bremsbetrieb vollständig schließt. Dadurch baut sich vor dieser Bremsklappe 22 ein Abgasdruck auf. Die aufgestauten Luftmassen strömen dadurch in die Bypassleitung 23, die nahe des Turbinenrades 28 in den Strömungskanal 17 einmündet. Somit kann die Turbinendrehzahl hoch gehalten werden, wodurch das zwangsweise über eine Welle 29 verbundene Verdichterrad 31 die angesaugte Luft komprimiert und dem Motor 10 zuführt. Dadurch ist in diesem System ein erhöhter Luftmassendurchsatz gegeben, wodurch die Temperatur der Luft hinter dem Motor nieder gehalten werden kann.

Die mit der Abgasabsperrvorrichtung 22 in Verbindung stehende Abblasevorrichtung 24 ist als Dosier- und Überdruckventil ausgebildet. Dadurch ist der maximale Staudruck vor der Abgasabsperreinrichtung 22 begrenzbar. Diese Druckbegrenzung weist den Vorteil auf, daß eine Überwachung von ggf. überhöht aufgetretenen Drücken gegeben ist. Zusätzlich bietet dieses Überdruckventil eine Auslegungsmöglichkeit für eine Anhebung des Ladedrucks bei niederen Motordrehzahlen. Mit Hilfe einer intelligenten Regelung des Abblaseventils läßt sich die Bremscharakteristik des Motors vorteilhaft beeinflussen.

Sobald ein zu hoher Staudruck an der Abgasabsperrvorrichtung 22 anliegt, öffnet sich das Überdruckventil, so daß die aufgestauten Luftmassen über die erste und zweite Verbindungsleitung 26, 27a oder 27b in die zweite Abgasleitung 19 bzw. Turbinenspirale 17 abströmen können.

Die Bypassleitung 23 weist einen nicht dargestellten Verteiler auf, der alle in dem Gehäuse 32 angeordneten Düsenöffnungen 33 versorgt. Alternativ kann vorgesehen sein, daß anstelle der Düsenöffnungen 33 ein Leitgitter in dem Gehäuse 32 vorgesehen ist. Durch die tangentiale Anordnung der Düsenöffnungen 33, die beispielsweise 10° gegenüber der Eintrittsfläche 36 angeordnet sein können, werden die Luftmassen drallförmig zugeführt. Dadurch kann eine hohe Turbinenleistung bzw. Turbinendrehzahl erreicht werden, die wiederum einen hohen Luftdurchsatz des Motors 10 bewirkt.

Die Düsenöffnungen 33 stellen praktisch den Bremsspalt dar, der dem aus dem Stand der Technik bekannten Bremsklappenspalt mit einer definierten Größe für zugelassene Motorgegendrücke im wesentlichen entspricht. Die Summe der Düsenöffnungsquerschnitte ist in der Größenordnung ausgebildet wie ein Bremsklappenspalt der Abgasabsperrvorrichtung 22, der aus dem Stand der Technik bekannt ist.

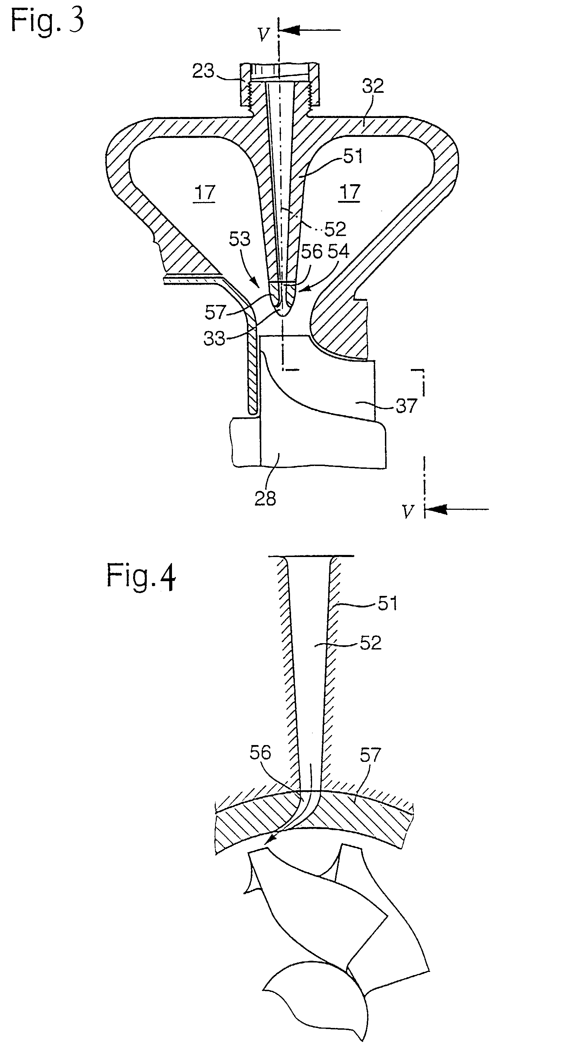

In Fig. 2 ist ein schematischer Schnitt eines zweiflutigen Abgasturboladers 13 dargestellt. Das Gehäuse 23 weist eine die Strömungskanäle 17 trennende Trennwand 51 auf. In dieser Trennwand 51 ist ein Trennwandkanal 52 vorgesehen, an den eine Bypassleitung 23 anschließbar ist. An einem freien Ende 53 der Trennwand 51 nahe dem Turbinenrad 28 ist eine Düse 54 angeordnet. Die Düse 54 weist einen unmittelbar sich an den Trennwandkanal 52 anschließenden Düsenkanal 56 auf, der eine zum Turbinenrad 28 weisende Düsenöffnung 33 aufweist. Die Düsenöffnung 33 ist unter einem flachen Austrittswinkel zum Turbinenrad 28 angeordnet, wie in Fig. 3 dargestellt ist. Somit kann die über die Bypassleitung 23 zugeführte Luftmasse im wesentlichen tangential in den Radialringkanal 34 einströmen und auf die Schaufeln 37 des Turbinenrades 28 treffen.

Im Ausführungsbeispiel gemäß Fig. 2 und Fig. 3 sind mehrere über den Umfang des Gehäuses 32 verteilt angeordnete Trennwandkanäle 52 vorgesehen, die am freien Ende 53 der Trennwand 51 in einen Düsenring 57 münden, der entsprechend der Anzahl der Trennwandkanäle 52 Düsen 54 aufweist. Der Düsenring 57 kann als separates Bauteil gefertigt sein. Dadurch können die an die Fertigungsgenauigkeit des Düsenringes 57 gestellten, sehr hohen Anforderungen aufgrund der extrem kleinen Düsenkanäle 56 und Düsenöffnungen 57 und deren starken Einflüsse auf das Systemverhalten der Turbine 18 erfüllt werden. Alternativ kann vorgesehen sein, daß die Düsenkanäle 56 und Düsenöffnungen 33 einstückig mit der Trennwand 51 ausgebildet sind.

Die Bypassleitungen 23 weisen einen geringen Querschnitt auf, wobei sich der Querschnitt der Bypassleitung 23 stromab über den Trennwandkanal 52 und den Düsenkanal 56 bis zur Düsenöffnung 33 kontinuierlich verjüngen. Dadurch kann erzielt werden, daß die Strömungsgeschwindigkeiten trotz der kleinen Strömungsquerschnitte in den Zuführungen relativ gering und damit verlustarm ausgebildet sind, wobei aufgrund des Expansionsquerschnittes unmittelbar nach der Düsenöffnung 33 nahe dem Turbinenrad sich aufgrund der höhen Druckverhältnisse Überschallgeschwindigkeiten für die Luftmassen ergeben können, die auch bei relativ kleinen Turbinenwirkungsgraden eine hohe Turbinenleistung bewirken.

Desweiteren kann alternativ vorgesehen sein, daß anstelle von einem oder mehreren Trennwandkanälen 52 in der Trennwand 51 ein Ringkanal bzw. ein Ringraum vorgesehen ist. Dadurch kann gleichmäßig über den Umfang der Trennwand 51 die Luftmasse zuströmen, wobei am freien Ende 53 der Trennwand 51 ebenfalls ein Düsenringkanal mit Einzeldüsen vorgesehen sein kann.

Der Düsenring 57 mit den über den Umfang verteilten Düsen 54 kann alternativ als Leitgitter ausgebildet sein, wodurch die Luftmasse ebenfalls analog der Düsen 54 umgelenkt und unter einem flachen Austrittswinkel in den Radialringkanal 34 nahe des Turbinenrades 28 einströmen kann.

Die in Fig. 2 und Fig. 3 dargestellten Ausführungsformen als auch die alternative Ausführungsform mit einem Ringkanal und dem der Trennwand 51 zugeordneten Leitgitter kann ebenso bei mehrflutigen Abgasturbolader-Radialturbinen eingesetzt werden. Ebenso kann entsprechend dem Einsatzfall sowohl Einzeldüsen 54, ein Düsenring 57 oder ein Leitgitter an einem freien Ende 53 der Trennwand 51 vorgesehen sein, die sowohl einzelne Trennwandkanäle 52 als auch einen Ringraum aufweisen. Eine derartige zusätzliche Zuführung der Luftmassen über die Trennwand 51 unmittelbar vor das Turbinenrad 28 in den Radialringkanal 34 kann insbesondere bei sogenannten Turbo-Brake-Systemen eingesetzt werden, da hier eine Temperaturerhöhung abgesenkt werden kann.

Eine zu Fig. 2 und Fig. 3 beschriebene Düsenanordnung am freien Ende 53 einer Trennwand 51 kann eine hohe Aufladung der Brennkraftmaschine ermöglichen, die beispielsweise während der Bremsphase durch ein energetisch günstigeres Verlustverhalten des Gases nach dem Zylinder bis zum Turbinenrad 28 für die Arbeitsumsetzung innerhalb der Turbine 18. Dies beruht darauf, daß die vom Verdichter 12 geforderte Luftmasse im direkten Zusammenhang zur Ausnutzung der von der Brennkraftmaschine abgegebenen Exergie in der Turbine 18 und damit zur Höhe der erreichbaren Bremsleistung steht. Neben dem Einsatz im Bremsbetrieb kann eine derartige Modifikation der Turbine 18 auch als Beschleunigungshilfe genutzt werden.

Desweiteren kann ein Hochdrucktrakt vor dem Turbinenrad 28 auch zur Leistungserhöhung der Turbine 18 mittels zusätzlicher Wassereinspritzung, z.B. bei Notbremsungen, eingesetzt werden. Desweiteren kann vorgesehen sein, daß die Bypassleitungen 23 zum Trennwandkanal 52 von relativ großvolumigen Austrittskrümmern unabhängig angeordnet sein können, so daß sich diese im Querschnitt kleinen Bypassleitungen 23 für einen gezielten und dosierten Transport von beliebigen Fluiden zur Turbine 18 bzw. nachfolgenden Konvertern und Filtern vorteilhafterweise einsetzen lassen.

## Patentansprüche

1. Motorbremsvorrichtung für eine Brennkraftmaschine, die einen Abgasturbolader (13) mit einer Turbine (18) und einem Verdichter (12) sowie eine Abgasleitung (16, 19) und eine Ansaugleitung (11, 14) aufweist und mit mindestens einer stromauf der Turbine (18) in der Abgasleitung (16) angeordneten Abgasabsperrvorrichtung (22), wobei stromauf der Abgasabsperrvorrichtung (22) zumindest eine von der Abgasleitung (16, 19) abführende Bypassleitung (23) vorgesehen ist, die in einem Bereich nahe eines Turbinenrades (28) einmündet, wobei eine die Bypassleitung (23) durchströmende Luftmasse über zumindest eine am freien Ende (53) einer Trennwand (51) einer mehrflutigen Turbine (18) angeordneten Düsenöffnung (33) einem Radialringkanal (34) der Turbine (18) zugeführt wird, wobei in der Trennwand (51) zumindest ein Trennwandkanal (52) angeordnet ist, der jeweils in die Düsenöffnung (33) mündet, dadurch gekennzeichnet, daß der zumindest eine Kanal (52) zur Düsenöffnung (33) verjüngend ausgebildet ist und die Düsenöffnung (33) den engsten Querschnitt aufweist, wobei am freien Ende (53) der Trennwand (51) ein Düsenring (57) mit zumindest einem eine Düse (54) bildenden Düsenkanal (56) und Düsenöffnung (33) vorgesehen und der Düsenkanal (56) zur Düsenöffnung (33) verjüngend ausgebildet ist oder daß am freien Ende (53) der Trennwand (51) ein Leitgitter angeordnet ist.

2. Motorbremsvorrichtung nach Anspruch 1, dadurch gekennzeichnet, daß in der Trennwand (51) ein Ringraum vorgesehen ist, der sich bis zu der zumindest einen Düsenöffnung (33) erstreckt.

3. Motorbremsvorrichtung nach Anspruch 1 oder 2, dadurch gekennzeichnet, daß an jedem in der Trennwand (51) zugeordneten Trennwandkanal (52) eine Düse (54) angeordnet ist.

4. Motorbremsvorrichtung nach einem der Ansprüche 1 bis 3, dadurch gekennzeichnet, daß die Düsenöffnung (33) zur Trennwand (51) relativ zur Umfangsrichtung des Turbinenrades (28) einen flachen Austrittswinkel aufweist.

5. Motorbremsvorrichtung nach einem der Ansprüche 1 bis 4, dadurch gekennzeichnet, daß die Summe der Querschnittsfläche der Düsenöffnungen (33) zumindest einer definierten Größe eines Bremsklappenspaltes für einen zugelassenen Motorgegendruck eines Abgasabsperrventils (22) entspricht.

6. Motorbremsvorrichtung nach einem der vorhergehenden Ansprüche, dadurch gekennzeichnet, daß zumindest die Abgasabsperrvorrichtung (22) und der zumindest eine stromauf der Abgasabsperrvorrichtung (22) angeordnete Abzweig für die Bypassleitung (23) in dem Gehäuse (32) der Turbine (28) angeordnet sind.

7. Motorbremsvorrichtung nach einem der vorhergehenden Ansprüche, dadurch gekennzeichnet, daß zumindest die Abgasabsperrvorrichtung (22) über eine Verbindungsleitung (26) mit einer Abblasevorrichtung (24) in Verbindung steht, dessen stromab angeordnete Verbindungsleitung (27a bzw. 27b) in die Abgasleitung (19) bzw. Turbinenspirale (17) einmündet.

8. Motorbremsvorrichtung nach Anspruch 7, dadurch gekennzeichnet, daß die Abblasevorrichtung (24) als Überdruckventil ausgebildet ist und auf einen maximalen Staudruck vor der Abgasabsperrvorrichtung (22) einstellbar ist.

9. Motorbremsvorrichtung nach Anspruch 7 oder 8, dadurch gekennzeichnet, daß das Abblaseventil (24) über eine Regelungseinrichtung (25) angesteuert wird.

10. Motorbremsvorrichtung nach einem der Ansprüche 7 bis 9, dadurch gekennzeichnet, daß die Abblasevorrichtung (24) mit einem Motormanagement kennfeldgeregelt ansteuerbar ist.

11. Motorbremsvorrichtung nach einem der Ansprüche 7 bis 10, dadurch gekennzeichnet, daß mit einer elektronischen Regelung einer Ventilstellung der Abblasevorrichtung (24) bei vollständig geschlossener Abgasabsperrvorrichtung (22) die Bremscharakteristik des Motors (10) veränderbar ist.

12. Motorbremsvorrichtung nach einem der vorhergehenden Ansprüche, dadurch gekennzeichnet, daß die Abgasleitung (16) in einer Schließstellung der Abgasabsperrvorrichtung (22) im wesentlichen vollständig absperrbar ist.

## Claims

1. Motor brake device, for an internal-combustion engine, which has an exhaust-driven supercharger (13) with a turbine (18) and a compressor (12), and also an exhaust pipe (16, 19) and a suction pipe (11, 14), and with at least one exhaust shutoff device (32) disposed upflow of the turbine, in the exhaust pipe (16), whereby at least one by-pass pipe (23), which opens in an area near to a turbine wheel, and leads off from the exhaust pipe (16, 19), is provided upflow from the exhaust shutoff device (22), and whereby an air mass which flows through the by-pass pipe (23) is supplied to a radial, annular duct (34) of the turbine (18), via at least one jet orifice (39) disposed at the free end (53) of a partition of a multi-flow turbine (18), and whereby at least one partition duct (32), which opens, in each case, into the jet orifice (33), is disposed in the partition (51), characterized in that the at least one duct (52) going to the jet orifice (33) is developed such that it narrows, and the jet orifice (33) has the narrowest cross-section, whereby, at the free end (53) of the partition (51), a nozzle ring (57) with at least one nozzle duct (56) and jet orifice (33), forming a nozzle (54), are provided, and the nozzle duct (56) going to the jet orifice (33) is developed such that it narrows, or in that a guide grid is disposed at the free end (53) of the partition (51).

2. Motor brake device in accordance with claim 1, characterized in that an annular space, which extends as far as the at least one jet orifice (33), is provided at the partition (51).

3. Motor brake device in accordance with claim 1 or 2, characterized in that a nozzle (54) is disposed on each associated partition duct (52) in the partition (51).

4. Motor brake device in accordance with any one of claims 1 to 3, characterized in that the jet orifice (33) of the partition (51) has a level outlet angle, relative to the peripheral direction of the turbine wheel (28).

5. Motor brake device in accordance with any one of claims 1 to 4, characterized in that the total cross-sectional area of the jet orifice (33) corresponds to at least a specific size of a brake valve gap for an approved engine back pressure of an exhaust shutoff valve (22).

6. Motor brake device in accordance with any one of the preceding claims, characterized in that at least the exhaust shutoff device (22) and the at least one branch for the bypass pipe (23), disposed upflow of the exhaust shutoff device (22), are disposed in the casing (32) of the turbine (28).

7. Motor brake device in accordance with any one of the preceding claims, characterized in that at least the exhaust shutoff device (22) is connected to the outward-blower device (24), the connection pipe (27a or 27b) of which, disposed downflow of it, opens into the exhaust pipe (19) or turbine spirals (17).

8. Motor brake device in accordance with claim 7, characterized in that the outward-blower device (24) is developed as an excess-pressure valve and can be set to a maximum pressure head in front of the exhaust shutoff device (22).

9. Motor brake device in accordance with claim 7 or 8, characterized in that the outward-blower valve (24) is controlled by means of a regulating device (25).

10. Motor brake device in accordance with any one of claims 7 to 9, characterized in that the outward-blower device (24) can be controlled in accordance with engine-performance characteristics.

11. Motor brake device in accordance with any one of claims 7 to 10, characterized in that, with a fully closed exhaust shutoff device (22), the braking characteristics of the engine (10) can be varied by electronic adjustment of a valve setting of an outward-blower device (24).

12. Motor brake device in accordance with any one of the preceding claims, characterized in that, with the exhaust shut-off device in a closed position, the exhaust pipe (16) can be substantially completely shut off.

## Revendications

1. Dispositif de freinage pour un moteur à combustion interne, qui comporte un turbocompresseur (13), équipé d'une turbine (18) et d'un compresseur (12), ainsi qu'une conduite de gaz d'échappement (16, 19) et une conduite d'aspiration (11, 14) et comprenant au moins un dispositif d'arrêt des gaz d'échappement (22), monté en amont de la turbine (18) dans la conduite de gaz d'échappement (16), au moins une conduite de dérivation (23) qui part de la conduite de gaz d'échappement (16, 19) étant prévue en amont du dispositif d'arrêt des gaz d'échappement (22), laquelle conduite de dérivation débouche dans une zone à proximité d'une roue de turbine (28), une masse d'air qui circule à travers la conduite de dérivation (23) étant amenée vers un canal annulaire radial (34) de la turbine (18) par l'intermédiaire d'au moins un orifice d'injecteur (33) disposé sur l'extrémité libre (53) d'une cloison de séparation (51) d'une turbine (18) à plusieurs pales, au moins un canal (52), qui débouche dans l'orifice d'injecteur (33), étant disposé dans la cloison de séparation (51), caractérisé en ce que le canal (52), au moins au'nombre d'un, est conçu en se rétrécissant vers l'orifice d'injecteur (33) et l'orifice d'injecteur (33) présente la section la plus étroite, une bague d'injecteur (57), qui comporte au moins un canal d'injecteur (56) et orifice d'injecteur (33) formant un injecteur (54), étant prévue sur l'extrémité libre (53) de la cloison de séparation (51) et le canal d'injecteur (56) se rétrécissant en allant vers l'orifice d'injecteur (33), ou en ce qu'une grille de guidage est disposée au niveau de l'extrémité libre (53) de la cloison de séparation (51).

2. Dispositif de freinage selon la revendication 1, caractérisé en ce qu'un compartiment annulaire est prévu dans la cloison de séparation (51), lequel s'étend jusqu'à l'orifice d'injecteur (33) au moins au nombre d'un.

3. Dispositif de freinage selon la revendication 1 ou 2, caractérisé en ce qu'un injecteur (54) est disposé dans chaque canal (52) associé dans la cloison de séparation (51).

4. Dispositif de freinage selon l'une quelconque des revendications 1 à 3, caractérisé en ce que l'orifice d'injecteur (33) présente, vers la cloison de séparation (51), un angle de sortie plat par rapport au sens de rotation de la roue de turbine (28).

5. Dispositif de freinage selon l'une quelconque des revendications 1 à 4, caractérisé en ce que la somme des surfaces transversales des orifices d'injecteur (33) correspond au moins à une valeur définie d'une fente du clapet de freinage pour une contre-pression du moteur tolérée dans une soupape d'arrêt des gaz d'échappement (22).

6. Dispositif de freinage selon L'une quelconque des revendications précédentes, caractérisé en ce qu'au moins le dispositif d'arrêt des gaz d'échappement (22) et la ramification, au moins au nombre d'une, montée en amont du dispositif d'arrêt des gaz d'échappement (22) et destinée à la conduite de dérivation (23), sont montés dans le boîtier (32) de la turbine (28).

7. Dispositif de freinage selon l'une quelconque des revendications précédentes, caractérisé en ce qu'au moins le dispositif d'arrêt des gaz d'échappement (22) communique par l'intermédiaire d'une conduite de liaison (26) avec un dispositif d'échappement (24), dont la conduite de liaison (27a ou 27b), montée en aval, débouche dans la conduite de gaz d'échappement (19) ou la spirale de turbine (17).

8. Dispositif de freinage selon la revendication 7, caractérisé en ce que le dispositif d'échappement (24) est conçu en forme de soupape de surpression et peut être réglé à une pression dynamique maximale devant le dispositif d'arrêt des gaz d'échappement (22).

9. Dispositif de freinage selon la revendication 7 ou 8, caractérisé en ce que la soupape d'échappement (24) est commandée par un dispositif de réglage (25).

10. Dispositif de freinage selon l'une quelconque des revendications 7 à 9, caractérisé en ce que le dispositif d'échappement (24) peut être commandé par un gestionnaire du moteur selon la définition des réseaux caractéristiques.

11. Dispositif de freinage selon l'une quelconque des revendications 7 à 10, caractérisé en ce qu'il est possible, par un réglage électronique d'une position de la soupape du dispositif d'échappement (24), de faire varier la caractéristique de freinage du moteur (10) lorsque le dispositif d'arrêt des gaz d'échappement (22) est entièrement fermé.

12. Dispositif de freinage selon l'une quelconque des revendications précédentes, caractérisé en ce que, par le dispositif d'arrêt des gaz d'échappement (22) dans une position de fermeture, il est possible de fermer sensiblement en intégralité la conduite de gaz d'échappement (16).
